Europäisches Patentamt

European Patent Office

Office européen des brevets

(19)

(11) EP 0 871 011 A2

(12) EUROPEAN PATENT APPLICATION

(43) Date of publication:
14.10.1998 Bulletin 1998/42

(51) Int Cl.$^6$: **G01D 5/14**, G01B 7/30,
F02D 11/10, G01D 3/02

(21) Application number: 98302713.7

(22) Date of filing: 07.04.1998

(84) Designated Contracting States:
**AT BE CH CY DE DK ES FI FR GB GR IE IT LI LU
MC NL PT SE**
Designated Extension States:
**AL LT LV MK RO SI**

(30) Priority: 07.04.1997 US 835326

(71) Applicant: CTS Corporation
Elkhart Indiana 46514-1899 (US)

(72) Inventors:
• Olson, Thomas R.
  Chesterton, Indiana 46304 (US)
• Nonnemacher, Ronald C.
  Elkhart, Indiana 46515 (US)

(74) Representative: Loven, Keith James et al
Loven & Co
Quantum House
30 Tentercroft Street
Lincoln LN5 7DB (GB)

(54) **Control circuits for generating control signals proportional to the position of an input device**

(57) A pulse amplitude modulation circuit having constant frequency pulses of at least a predetermined amplitude being modulated with a linearly increasing output signal whose amplitude is proportional to the mechanical position of a variable position device such as a throttle control to cause a pulse amplitude modulation output signal to be generated that represents the physical position of the input device such as a throttle.

FIG. 1

## Description

## BACKGROUND OF THE INVENTION

### 1. FIELD OF THE INVENTION

The present invention relates to control circuits in general and specifically to control circuits for generating an output signal, $V_o$, representing the position of a throttle for controlling the fuel/air mixture of an internal combustion device.

### 2. DESCRIPTION OF RELATED ART INCLUDING INFORMATION DISCLOSED UNDER 37 CFR 1.97 AND 1.98

Modulation circuits are generally well known in the art and are used in the field of communications for transmitting information from one location to another in the form of pulse amplitude modulated pulses, frequency modulated output signals or variable analog output signals. Such circuits are generally used in the communications industry and are not widely used in linear control circuits. In the industrial controls industry, it is becoming more and more desirable to generate a signal representing movement or a positioning of a transducer, sending that signal to a controller, and controlling the function of a device based upon the receipt of the signal by the controller. For instance in the automotive field, an internal combustion engine is controlled by a microprocessor in many of its operations. One operation of an internal combustion engine that is controlled by a microprocessor is the adjustment of the fuel/air mixture through the carburetor or throttle body to the cylinders of the automobile engine. Technology is making the engines more responsive to a smaller adjustment of the fuel/air mixture ratio and thus it is important for the microprocessor to receive signals indicative of throttle position or accelerator pedal position so that it can adjust the throttle body to have the proper fuel/air mixture for the throttle position. The microprocessor is generally an engine control module and utilizes the output of a stepper motor as the throttle position sensor. This requires multiple signal inputs to the microprocessor.

It would be advantageous to have a control circuit with one output to the microprocessor that occurs in a predetermined signal range, that can be accurately followed within the range, and that can be detected as a fault if the signal is outside the range. Further, it would be advantageous to have a control circuit that could be formed on a single integrated circuit chip without the need for separate function chips and that had a simple "turn on", "turn off' signal output. The design, in such case, would be economical to build and simple to construct.

In addition, it would be advantageous to have such a control circuit that could generate either pulse amplitude modulated signals, frequency modulated signals, or analog output signals. Further, it would also be advantageous to have such control circuits to be self-diagnostic.

## SUMMARY OF THE INVENTION

The present invention relates to a first embodiment including a pulse amplitude modulation circuit that provides a pulsed output with a fixed frequency. The amplitude of the pulse is varied by a change in position of a control device such as a throttle moveable between first and second positions. A sensor circuit, including a signal conditioning circuit, is coupled to the throttle for outputting a linearly increasing signal, $V_m$, for a variable position of the throttle between the first and second positions. The amplitude of the linearly increasing output signal is proportional to the throttle position. A pulse generating circuit generates constant frequency pulses of at least a predetermined amplitude. Finally, a modulation circuit is coupled to the pulse generating circuit and the signal conditioning circuit for pulse amplitude modulating the constant frequency pulses, $V_p$, with the linearly increasing output signal, $V_m$, such that a pulse amplitude modulation output signal, $V_o$, is generated that represents an instantaneous throttle position.

In the case of a controller that moves between first and second positions, such as a throttle lever or a throttle in the form of a foot pedal, a transducer circuit such as a well-known Hall effect device (associated with magnets in a well-known manner) may be coupled to the throttle, and to a signal conditioning circuit to convert the throttle position into the linearly increasing output signal, $V_m$, whose amplitude is proportional to the position of the throttle. In such case, the pulse amplitude modulation output signal, $V_o$, is generated and represents the instantaneous position of the throttle. A microprocessor can use that signal to control the fuel/air mixture into the throttle body of an internal combustion engine.

Thus, the first embodiment of the present invention relates to a pulse amplitude modulation control circuit for generating a pulse amplitude modulation output signal, $V_o$, representing the position of a throttle for controlling the fuel/air mixture of an internal combustion device or engine, the throttle being moveable between first and second positions. The modulation control circuit comprises at least one Hall effect sensor coupled to the throttle and to a signal conditioning circuit that converts the throttle position to a linearly increasing output signal, $V_m$. A pulse generator circuit generates constant frequency pulses, $V_p$, of a determined amplitude. The modulation circuit is coupled to the pulse generating circuit and the signal conditioning circuit to pulse amplitude modulate the constant frequency pulses, $V_p$, with the linearly increasing output signal, $V_m$, such that a pulse amplitude modulation output signal, $V_o$, is generated that represents the position of the throttle. A microprocessor is coupled to the output of the modulation circuit and uses the pulse amplitude modulation output signal, $V_o$, to regulate the fuel/air mixture of the internal combustion engine or device.

A second embodiment of the present invention relates to a self-diagnostic pulse amplitude modulator circuit that eliminates the need for redundant output and detects in-range failures.

A third embodiment of the present invention relates to a frequency modulation circuit that is self-diagnostic, detects in-range failures, eliminates the need for redundant output, and does not require an analog-to-digital converter.

A fourth embodiment of the present invention relates to a self-diagnostic analog output circuit that detects in-range failures, eliminates the need for redundant output, and provides an analog output for circuits that require analog signals.

## BRIEF DESCRIPTION OF THE DRAWINGS

These and other features of the present invention will be more fully disclosed when taken in conjunction with the following DETAILED DESCRIPTION OF THE PREFERRED EMBODIMENTS in which like numerals represent like elements and in which:

FIG. 1 is a block diagram of the novel pulse amplitude modulation control circuit of the present invention;

FIG. 2 is a detailed circuit diagram of the pulse amplitude modulation control circuit shown in FIG. 1;

FIG. 3 illustrates the linearly increasing output signal, $V_m$, of the sensor circuit with a change in position of a transducer device;

FIG. 4 is a graph illustrating the output signal of the novel pulse generation circuit that includes security zones formed by maximum and minimum signal levels so that a fault can be detected by the microprocessor;

FIG. 5 illustrates the output, $V_o$, of the novel modulation circuit with respect to position of the transducer such as a throttle;

FIG. 6 is a block diagram of a second embodiment of the novel pulse amplitude modulation circuit;

FIG. 7 is a detailed circuit diagram of the second embodiment of the pulse amplitude modulation control circuit shown in FIG. 6;

FIG. 8 is a block diagram of a self-diagnostic pulse amplitude modulator circuit;

FIG. 9 is a detailed circuit diagram of the self-diagnostic pulse amplitude modulator circuit;

FIG. 10 is a block diagram of a self-diagnostic frequency or pulsewidth modulation output circuit;

FIG. 11 is a graph illustrating the waveform of the self-diagnostic frequency or pulsewidth modulation output circuit of FIG. 10;

FIG. 12 is a detailed circuit diagram of the self-diagnostic frequency or pulsewidth modulation output circuit shown in FIG. 10;

FIG. 13 is a block diagram of a self-diagnostic analog output circuit;

FIG. 14 is a graph illustrating the waveform of the output of the self-diagnostic analog output circuit; and

FIG. 15 is a detailed circuit diagram of the novel self-diagnostic analog output circuit of FIG. 13.

## DETAILED DESCRIPTION OF THE PREFERRED EMBODIMENTS

While the present invention will be described hereafter in relation to one use of the invention wherein a throttle position is sensed and converted to signals that can be used by a microprocessor to control the fuel/air mixture of a fuel metering system such as a throttle body on an internal combustion engine or device, it should be understood that the invention is not so limited and can be utilized to convert either the signal output of an electrical transducer or the position output of a mechanical transducer to a signal that can be utilized by a microprocessor to control some type of device.

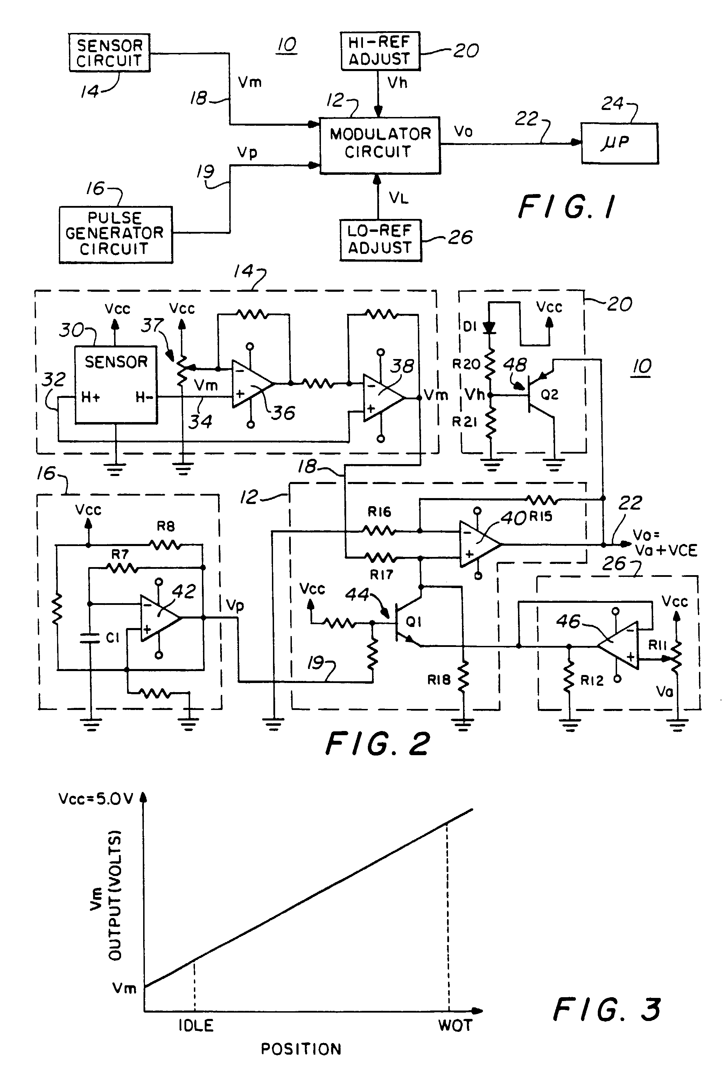

In FIG. 1, the novel pulse amplitude modulation control circuit 10 includes the modulator circuit 12 coupled to both a sensor circuit 14 and a pulse generation circuit 16. The novel sensor circuit 14 includes a signal conditioning circuit that converts a variable position input into a linearly increasing output signal, $V_m$, on line 18 whose amplitude is proportional to the variable position input. For instance, the sensor circuit 14 may include a Hall effect device and be of the type sold by CTS and designated 580 Series Electronic Throttle Sensor. It may be coupled to any mechanical device whose physical position changes, such as a throttle, and will convert the position of the device or throttle to a linearly increasing output signal, $V_m$. The pulse generator circuit 16 generates constant frequency pulses, $V_p$, of a determined amplitude. The modulation circuit 12 is coupled to the pulse generator circuit 16 and the sensor circuit 14 for pulse amplitude modulating the constant frequency pulses, $V_p$, on line 20 with the linearly increasing output signal, $V_m$, on line 18 such that a pulse amplitude modulation output signal, $V_o$, is generated on line 22 that represents the position of the mechanical device such as a throttle. A microprocessor 24 is coupled to the output of the modulation circuit for regulating another device such as the fuel/air mixture of an internal combustion engine based upon the pulse amplitude modulated signal, $V_o$.

To discriminate a normal signal from false highs and false lows at the output, $V_o$, a low reference adjust circuit 26 is coupled to the modulator circuit 12 for establishing a minimum low voltage output, $V_a$, and a high reference adjustment circuit 28 is coupled to the modulator circuit 12 for establishing a maximum amplitude, $V_h$, of the pulse amplitude modulated output signal, $V_o$.

FIG. 2 is a detailed circuit diagram of the pulse amplitude modulation control circuit 10 shown in FIG. 1. The novel sensor circuit 14 may include a Hall effect device 30. It generates a linearly increasing output signal H+ on line 32 and H- on line 34. These signals are applied to a signal conditioning circuit including operational amplifiers 36 and 38 as shown. The gain for the circuit 14 can be adjusted by varying the value of resistor R5 across operational amplifier 38. Resistor 37 may be adjusted as the other input to operational amplifier 36 to vary the offset of the circuit. This adjusts the output, $V_m$, on line 18 such that the output is in a desired range to be used by the modulator circuit 12.

The pulse generator circuit 16 includes a comparator 42 that has as one input a voltage fixed by resistance divider circuit R6 and R10. The other input is provided by resistor R7 and capacitor C1. By varying the resistor value R7 and/or capacitor C1 value, the frequency of operation of the pulse generator circuit 16 may be trimmed to the precise value necessary. Resistor R8 is strictly an output pull up resistor. Thus the output of the pulse generation circuit 16 oscillates with a constant frequency of

$$f = \frac{1}{k(R7xC1)} \qquad \text{Equation(1)}$$

where k is a constant and R7, C1 are the values of the resistor R7 and the capacitor C1, respectively. The output, $V_p$ on line 20 is coupled to the base of transistor 44 in modulation circuit 12. When the signal, $V_p$, from the pulse generation circuit 16 is low, transistor 44 (Q1) is OFF. The output of operational amplifier 40 with transistor 44 (Q1) off is defined by the following equation:

$$V_o = V_a + (\frac{R15}{R16} x \frac{R18}{R18+R17}) V_m$$

Equation(2)

This means that the output is the low reference voltage, $V_a$, plus strictly the sensor circuit output, $V_m$, times a gain term. If the $V_p$ output from pulse generator 16 is high, then transistor 44 (Q1) is turned ON. When transistor 44 is ON, the output signal, $V_o$, of operational amplifier 40 is then equal to:

$$V_o = V_a + V_{ce} \qquad \text{Equation(3)}$$

where $V_a$ is the low reference voltage caused by circuit 26 and $V_{ce}$ is the saturation voltage of transistor 44.

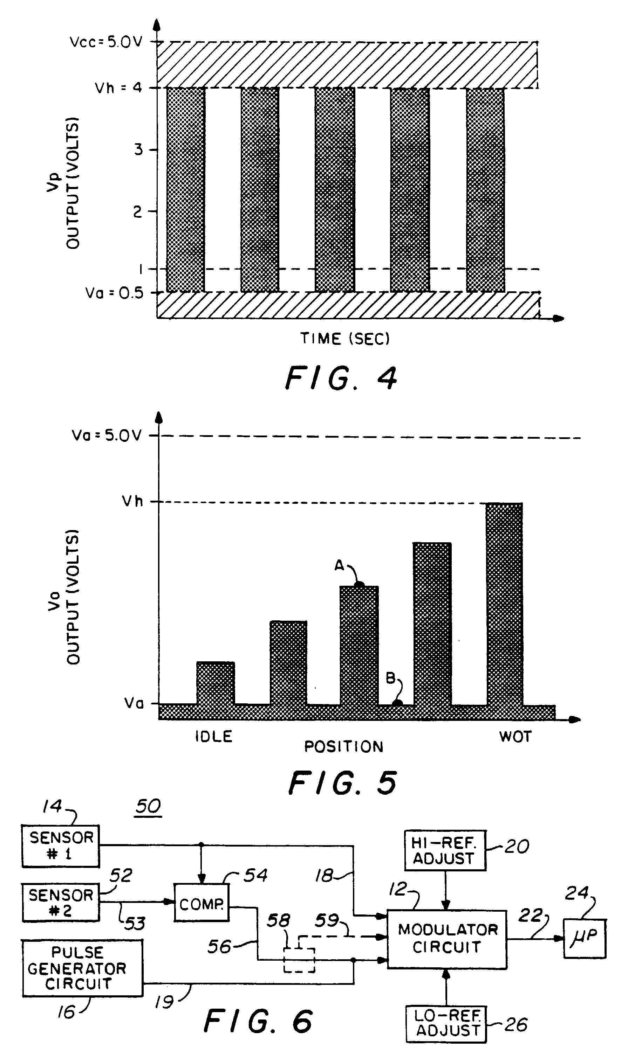

The output signal, $V_m$, from the sensor circuit 14 on line 18 is illustrated in FIG. 3 versus position of the throttle from an idle position to a wide open throttle position. The maximum the signal could be is 5 volts, the voltage, $V_{cc}$, of the power supply. It will be noted, however, that the idle position is greater than 0 volts and the wide open throttle position is less than 5 volts. This will be explained hereafter in reference to FIG. 4.

FIG. 4 is a graph of the pulse signal, $V_p$, from the pulse generator 16 that is provided to the modulator circuit 12. Note that the signal is a fixed frequency having a minimum amplitude at 1/2 volt and a maximum amplitude at 4 volts. The minimum amplitude could be at 1 volt depending upon customer requirements. When the sensor circuit output signal, $V_m$, is used to modulate the pulse generator circuit output $V_p$, the result is shown in FIG. 5 where the amplitude of the signals range from $V_a$ = minimum to $V_h$ = maximum. Thus, the peak or high signal of the pulses shown in FIG. 5 is proportional to the sensed position of the throttle. The fixed low reference signal could begin at $V_a$ = 1/2 volt (or 1 volt if desired) to discriminate against false lows. Thus as shown in FIG. 5, when the microprocessor 24 sees the variable signal level A followed by the fixed reference signal B, the security of the signal is insured. An open or short circuit in the pulse modulator circuit 12 will cause the output, $V_o$, to go either high or to a zero. In such case, the microprocessor 24 detects a problem and can then ignore the output, $V_o$, of the control circuit. Thus, with the use of high and low security zones, $V_a$ and $V_h$, the need for redundant outputs is eliminated. The microcomputer 24 knows when a fault occurs because the output signal will not shift to the next predetermined pulse level. The low reference voltage, $V_a$, is set by the circuit 26 in FIG. 2. It will be noted that the operational amplifier 46 has one input coupled to the emitter of transistor 44 (Q1) and another input coupled to variable resistor R11. By adjusting R11 to provide an input with respect to the emitter output of transistor 44 (Q1), a voltage can be applied to load resistor R12 that will cause a minimum output from transistor 44 (Q1) thus establishing a low reference minimum value, $V_a$.

The maximum value, $V_h$, is established by circuit 28, shown in FIG. 2, through the use of resistor divider circuits R20 and R21. This causes a fixed voltage value to be applied to the base of transistor 48 (Q2) and if the output, $V_o$, on line 22 attempts to exceed 4 volts, transistor 48 (Q2) conducts thus holding the voltage level at a maximum of 4 volts.

Thus the pulse amplitude modulation control circuit 10 shown in FIG. 1 and FIG. 2 comprises a pulse generator circuit 16 for generating constant frequency pulses, $V_p$, of at least a predetermined amplitude and a sensor circuit 14 for converting a variable energy input (throttle position) into a linearly increasing output signal, $V_m$, (by means of Hall effect device 30) where the output signal, $V_m$, has an amplitude that is proportional to the variable input (throttle position). The pulse modulator circuit 12 is coupled to both the pulse generator circuit 16 and the sensor circuit 14 for modulating the pulse amplitude of the constant frequency pulses, $V_p$, with the linearly increasing output signal, $V_m$, such that a pulse amplitude modulation output signal, $V_o$, is generated that represents the variable input (throttle position). The sensor offset adjustment resistor 37 forms a portion of the sensor circuit 14 for causing the sensor circuit output, $V_m$, to be in a designated range for use by the modulator circuit 12.

The low reference voltage adjustment circuit 26 forms a first fault detector for causing a minimum output signal,

$$V_o = V_a + (\frac{R15}{R16} \times \frac{R18}{R18+R17}) V_m$$

such that, when $V_m$ = zero, a minimum output signal, $V_a$, is generated to cause a first normal signal. If $V_o$ is actually less than $V_a$, a false low signal is presented.

The high reference voltage adjustment circuit 28 is a second fault detector for limiting the output voltage, $V_o$, to a predetermined maximum value, $V_h$, to cause a second signal if the output signal, $V_o$, presents a false high. The diode D1 in the high voltage adjustment circuit 28 temperature compensates transistor 48 (Q2) so that ratiometric clamping is maintained with temperature variation.

As stated earlier, the Hall effect device 30 may be coupled to a throttle control device and act as the sensor whose output is used for converting the throttle control position to the linearly increasing output signal, $V_m$.

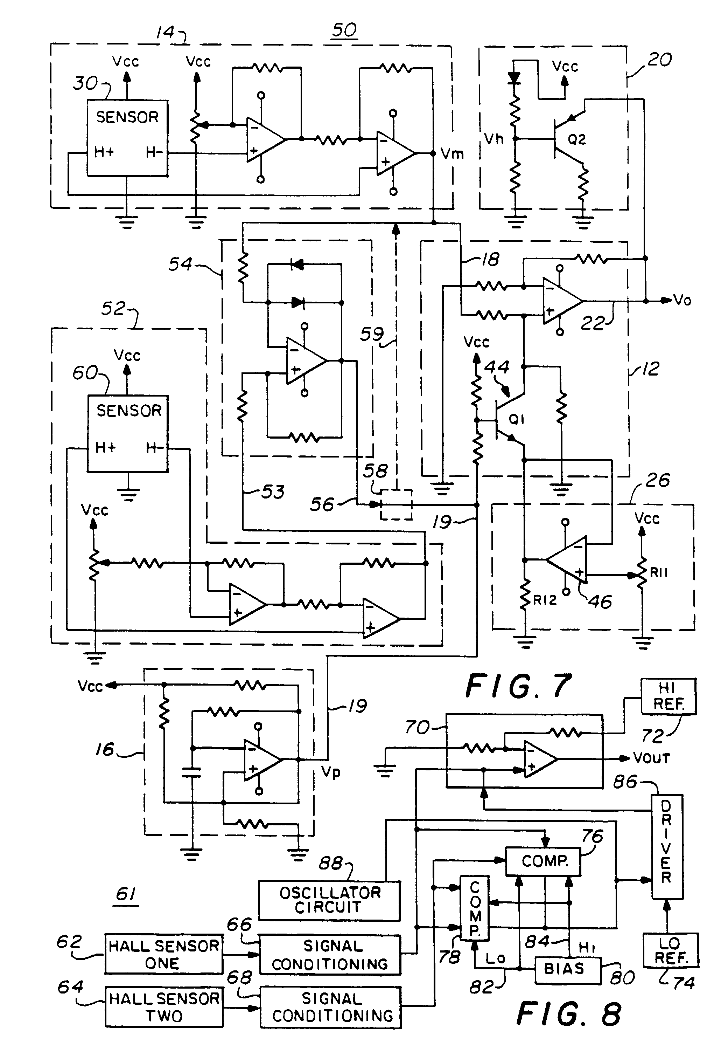

FIG. 6 discloses an optional pulse amplitude modulator circuit where a possibility of an in-range output error exists. In this case, the circuit 50 is identical to FIG. 1 except that an additional sensor circuit 52 and comparator 54 have been added. The sensor circuits 14 and 52 are coupled to the same position changing device, such as a throttle, and the circuits are adjusted so that their outputs match over a given temperature range. The outputs are compared in comparator 54 and if they are the same there is no output on line 56 and the output of sensor circuit 14 on line 18 is coupled to modulator circuit 12 and the output of the modulator circuit, $V_o$, on line 22 is generated as explained previously. However, if the output of the sensors 14 and 52 are not the same, for example, in the case of in-range failure, comparator 54 generates an output on line 56 that causes the output, $V_o$, on line 22 from modulator circuit 12 to be pulled low regardless of either sensor output voltage from sensor circuit 14 or circuit 52. Thus, the second Hall effect circuit 52 causes the output to go low if the first Hall effect circuit 14 has an in-range failure. A separate transistor 58 (shown in phantom lines and coupled to the line 58 from comparator 54) may be used to pull the output, $V_o$, low where a possible problem may occur with transistor 44 (Q1) in the modulator circuit 12. See FIG. 7. Transistor 44 (Q1) is vital to error detection and correction. A separate transistor, represented by block 58 in phantom lines, would be the same as transistor 44 (Q1) but would give the comparator 54 its own transistor to pull $V_o$ low if a problem occurs with transistor 44.

Thus, as can be seen in detail in FIG. 7, the second sensor circuit 52 includes a second Hall effect sensor 60 coupled to both the positioning device (such as a throttle control) and the signal conditioning circuit described in relation to FIG. 2 that generates a second linearly increasing output signal, $V^1_m$, on line 19. The sensor circuit 52 otherwise operates exactly the same as circuit 14 which has been described previously. The comparator circuit 54 is coupled to both the first and second outputs of sensors 14 and 52 on lines 18 and 19 and generates an output signal on line 56 only when the outputs, $V_m$ and $V^1_m$, from the Hall effect sensors 60 and 30 differ at least a predetermined amount. The comparator output is then coupled to the modulator circuit to cause the output, $V_o$, to remain at, or less than, $V_a$, thus indicating a fault when the outputs from the two Hall effect sensors differ.

The transistor 44 (Q1) in the modulation circuit 12 causes the output, $V_o$, as explained previously. The pulse generation circuit output, $V_p$, is coupled to the transistor 44 on line 20. The comparator circuit 54 has an output on line 56 also coupled to either transistor 44 or its own transistor 58 such that an output signal generated by the comparator circuit on line 56 will cause either transistor 44 or its own transistor 58 to alter the modulation circuit output signal, $V_o$, to a continuous output signal, $V_a$ indicating a fault. When the comparator circuit 54 utilizes its own transistor 58, the output of that transistor 58 is coupled on line 59, as shown in phantom in FIG. 7, to the modulation circuit 12.

Again, the low reference voltage circuit 26 comprises a load resistor R12 coupled to transistor 44 (Q1) for determining the conduction of transistor 44. An operational amplifier 46 has a first input coupled to the transistor 44, a second input coupled to a variable resistor R11 and an output coupled to the load resistor R12. Thus, by adjusting the variable resistor R11 the amount of conduction of transistor 44 (Q1) can be controlled to set a minimum signal output level, $V_o = V_a$, from the modulation circuit 12.

As stated earlier, and as shown in FIG. 1, the microprocessor 24 is coupled to the output of the modulation circuit 12 for detecting false signals and receiving the output signal, $V_o$. Thus, output signal, $V_o$, represents the variable position input, or throttle position, to the transducer circuit 14.

FIG. 8 is a block diagram of a self-diagnostic pulse amplitude modulator circuit 61. It is similar in most respects to the circuit illustrated in FIG. 6. It has first and second Hall sensors 62 and 64, each of which is coupled to a respective signal conditioning circuit 66 and 68. The output of signal conditioning circuit 66 is coupled directly to the modulation circuit 70. However, the outputs of both the signal conditioning circuits 66 and 68 are coupled to two comparators 76 and 78. Also coupled to comparators 76 and 78 is a bias signal from bias circuit 80 on line 84 representing a high error bias signal and a low error bias signal on line 82 from bias circuit 80. Thus, if the difference between the outputs of the signal conditioning circuits 66 or 68 produces either an in-range error signal by exceeding the high bias signal on line 84 or being less than the low bias signal on line 82, then comparator circuit 76 or 78 produces an output to driver 86 to pull the output $V_o$ low. Pulse generator or oscillator 88 also has its output coupled to driver 86. Thus, this circuit knows whether a high or low error signal occurs and is thus self-diagnostic. The remainder of the circuit, including the high reference 72 and low reference 74 as well as driver 86, oscillator 88, and modulator 70, functions as explained previously in relation to FIG. 6.

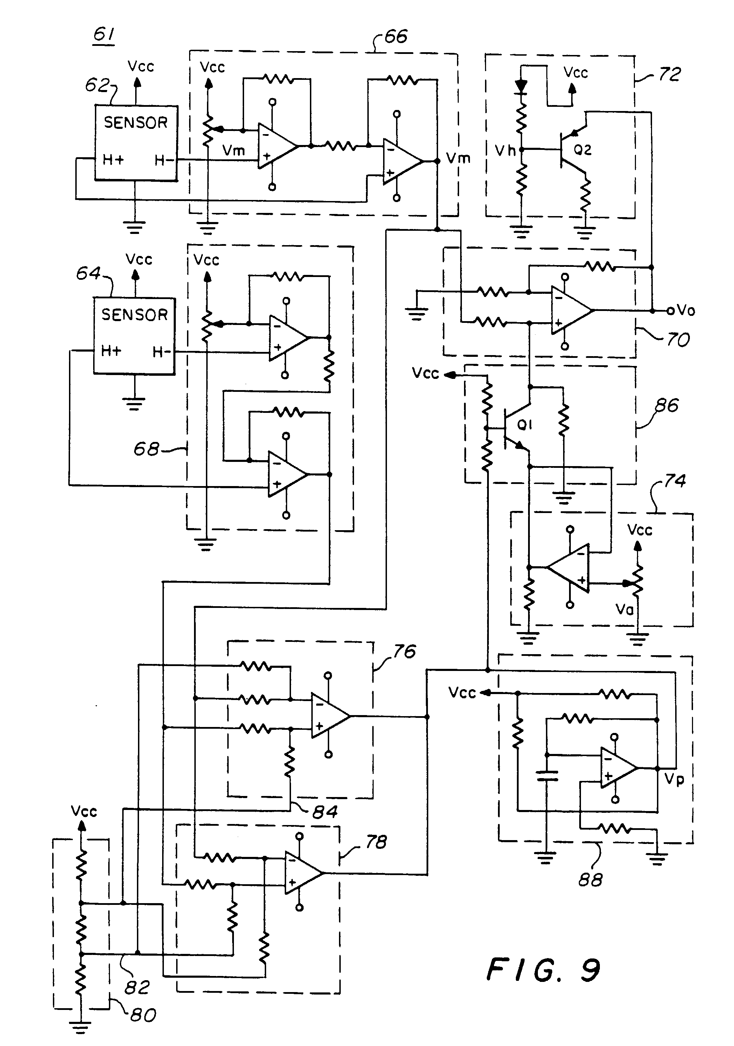

FIG. 9 is a detailed circuit diagram of the self-diagnostic pulse amplitude modulator circuit 60 shown in FIG. 8. It can be seen in FIG. 9 that the output from bias circuit 80 on line 82 goes to the negative input of both comparators 76 and 78. In like manner, the output on line 84 from bias circuit 80 goes to the positive input of comparator 76 as well as to the positive input of both comparators 76 and 78. Note that the output of signal conditioner 66 is coupled to the negative input of comparator 76 and the positive input of comparator 78. In like manner, the output of signal conditioner 68 is coupled to the positive input of comparator 76 and the negative input of comparator 78. With this connection, each of the outputs from the signal conditioning devices 66 and 68 is compared to a high and low reference bias level to detect any difference in the signals, thus representing an in-range failure. If such failure occurs, then an output is generated from the comparators 76 and 78 to the input of driver circuit 86, which functions as previously described.

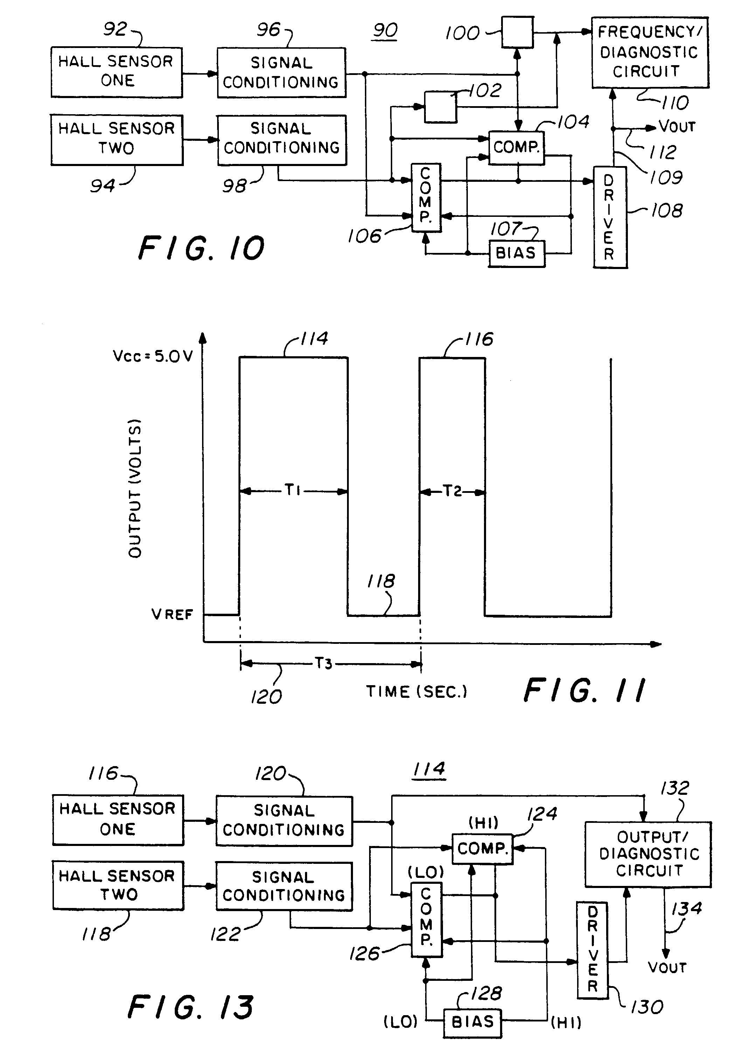

FIG. 10 is another embodiment of a circuit 90 that utilizes a self-diagnostic frequency modulation or pulse width modulation output circuit. Again, there are two sensor units 92 and 94, each coupled to a respective signal conditioning unit 96 or 98. The output of signal conditioning unit 96 is coupled to driver unit 100, which is also coupled to the frequency/diagnostic circuit 110. In like manner, the output of signal conditioning unit 98 is coupled through driver 102 to the frequency/diagnostic circuit 110. In addition, as stated earlier in relation to FIG. 8, the in-range error detection circuit is formed comprising comparators 104 and 106 that have as inputs the respective signals from both signal conditioning units 96 and 98 as well as both the high and low bias signals from bias circuit 107. The output from comparators 104 and 106 are coupled to driver 108. The circuit just described thus functions identically to that disclosed and explained in relation to FIG. 8. The output of the driver circuit 108 on line 109, however, is coupled to the output of the diagnostic circuit 110 on line 112 to pull the output, $V_o$, low in the event of a malfunction of the sensors 116 and 118 or signal conditioning circuits 120 and 122.

FIG. 11 is a graph illustrating the output waveform from the diagnostic circuit 110 on line 112. It will be noted that pulse 114 is wider than pulse 116 and that the space 118 between pulses 114 and 116 is also of a difference width. Thus pulse 114, T1, is larger than pulse 118, T2. The complete cycle is designated by the width 120, T3. The circuit, therefore, may be described as either a frequency modulation circuit or a pulsewidth modulation circuit.

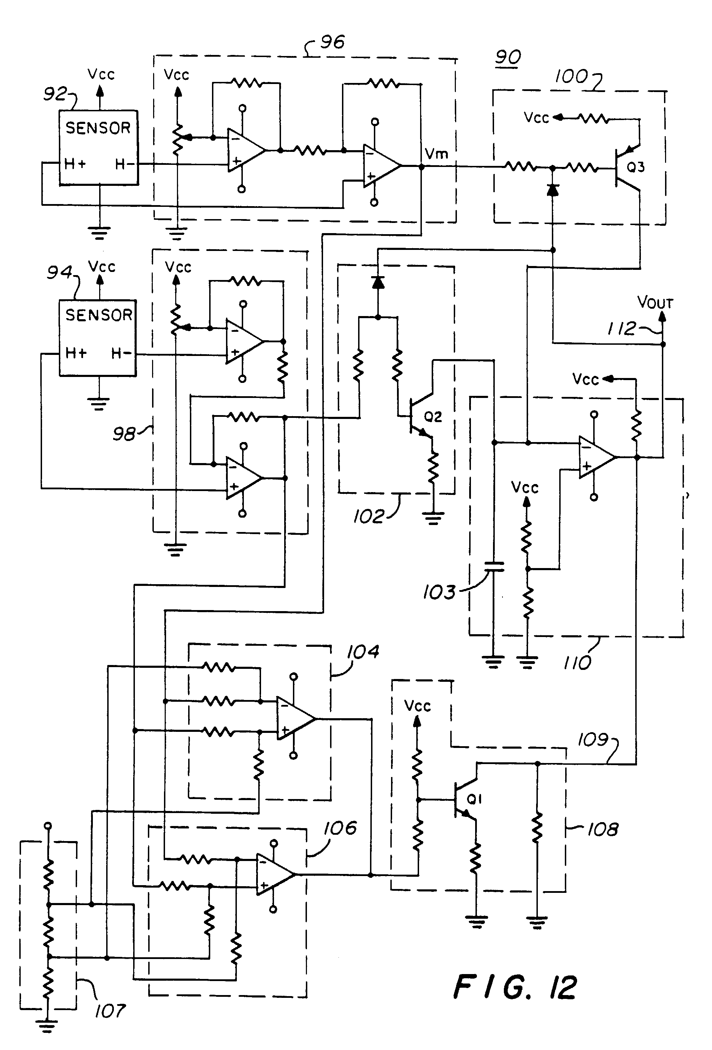

FIG. 12 is a detailed circuit diagram of the self-diagnostic frequency or pulsewidth modulation output circuit 90. The sensors 92 and 94 can be seen to be connected to the signal conditioning units 96 and 98, respectively. Signal conditioner 96 has its output coupled first to a driver 100 that includes a transistor, Q3, whose output is coupled to a capacitor 103 in the frequency/diagnostic circuit 110. In like manner, the output signal from signal conditioner 98 is coupled first to a driver 102 that has a transistor Q2 whose output is coupled also to the capacitor 103 in the frequency/diagnostic circuit 110. Circuits 100 and 102 are constant current sources that charge capacitor 103 linearly when $V_m$ is constant. In addition, comparator circuits 104 and 106 along with bias network 107 function as described previously in relation to FIG. 9. When the capacitor 103 charge is equal to the high voltage of the bias network 107, comparator 104 generates an output to driver circuit 108 that pulls the output, $V_o$, low. Thus, the variable time of charging capacitor 103 causes the variable width pulses $T_1$, $T_2$, and $T_3$. Thus, the outputs of the comparators 104 and 106 are coupled to a driver 108 that provides an output from transistor Q1 on line 109 to the output 112 of the frequency/diagnostic circuit 110 to pull the output low. Thus, the pulsewidths, $T_1$, $T_2$, vary as the $V_m$ voltage varies.

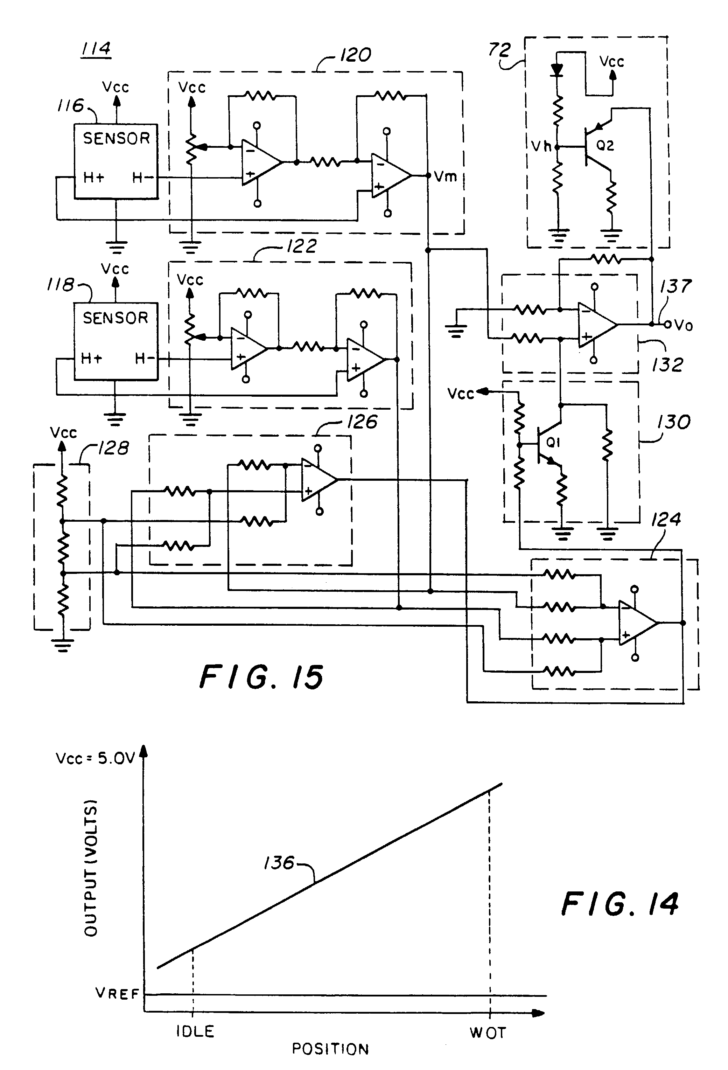

In still another embodiment illustrated in FIGS. 13 and 15, a self-diagnostic analog output circuit is shown. The block diagram of the self-diagnostic analog output circuit 114 is illustrated in FIG. 13 and again includes the first and second sensors 116 and 118, each of which is coupled to a respective signal conditioning circuit 120 and 122. The output of signal conditioning circuit 122 is coupled directly to the output/diagnostic circuit 132 but is also connected to the in-range error detection circuit that includes the two comparators 124 and 126 and the bias circuit 128. These circuits function as explained previously in relation to the other alternate embodiments such as those shown in FIGS. 8 and 10. The outputs of the comparators 124 and 126 are coupled to driver 130 whose output is coupled to the output/diagnostic circuit 132 and the analog output is derived on line 134. When either of the comparators 124 and 126 generates an output, indicating the detection of an in-range error, the output, $V_o$, of output circuit 132 goes low.

FIG. 14 is a graph of the analog output on line 134. It will be noted that line 136 is simply a straight line analog output voltage signal. This signal can be used by analog circuits that exist and that do not require digitizing of the signal. Thus for a given throttle position, the output 136 forms a straight line of increasing magnitude.

Again, the detailed circuit diagram of the self-diagnostic analog output circuit 114 is shown in FIG. 15. The block elements shown in FIG. 13 are shown in detail in FIG. 15 and have corresponding numbers and function as indicated previously in relation to the other circuits. The circuit in FIG. 15 can also have a high reference voltage circuit 72 (as shown) and a low reference circuit (not shown) such as circuit 74 in FIG. 9.

Thus there has been disclosed a novel control circuit for converting the position of a mechanical device to a pulse amplitude modulated output signal for use by a microprocessor in controlling a function of a second device. In the example given, a throttle position is converted to pulse amplitude modulation signals and utilized by the microprocessor to control the fuel/air mixture to an internal combustion engine. The circuit is advantageous in that it avoids redundant outputs, and requires only one output so long as the output is in the operating zone established. If the sensor is shorted internally or has an open circuit, that condition is detected so that the microprocessor is aware of it and can take it into consideration. The sensors could also be used for measuring pressure, temperature and the like. Another advantage includes producing the entire circuits shown in FIGS. 2 and 7 on a single microchip which eliminates the need for a separate function chip. Further, the design is simple and effective. Other embodiments disclosed are self-diagnostic pulse amplitude modulation, frequency or pulsewidth modulation, and an analog output circuit.

The corresponding structures, materials, acts, and equivalents of all means or step plus function elements in the claims below are intended to include any structure, material, or act for performing the function in combination with other claimed elements as specifically claimed.

**Claims**

1. A control circuit comprising:

    a) a control device moveable between first and second positions;
    b) a sensor coupled to said control device for connecting the control device position to an output signal;
    c) a signal conditioning circuit coupled to said sensor for converting the sensor output signal into a linearly increasing signal, $V_m$, proportional to said sensor output signal; and
    d) a signal modifying circuit operatively connected to the signal conditioning circuit for modifying the linearly increasing signal, $V_m$, such that an output signal, $V_o$, is generated that represents the instantaneous control device position.

2. A control circuit according to Claim 1, wherein the signal modifying circuit is a pulsewidth modulation circuit.

3. A control circuit according to Claim 2, wherein said signal conditioning circuit converts said output signal to a linearly increasing signal, $V_m$, proportional to the position of said control device.

4. A control circuit according to Claim 2, wherein the pulsewidth modulation circuit is coupled to the signal conditioning circuit for modulating the linearly increasing signal, $V_m$, such that a pulsewidth modulation output signal, $V_o$, is generated that represents the position of said control device as it moves between said first and second positions.

5. A control according to Claim 2, 3 or 4, further including a first detector circuit including a low reference voltage adjustment circuit for limiting the output signal, $V_o$, to a predetermined minimum value, $V_a$, when $V_m$ = minimum, such that a fault output signal $V_o$ = 0 is generated to indicate a fault signal if said linearly increasing signal, $V_m$, presents a false low.

6. A control circuit according to Claim 5, further including a second detector circuit having a high reference voltage adjustment circuit for limiting the output voltage, $V_o$, to a predetermined maximum value, $V_h$, if said output signal, $V_o$, tries to exceed the maximum value, $V_h$.

7. A control circuit according to Claim 6, wherein the high reference voltage circuit comprises:

    a second transistor having a first input and a second input, the first input being coupled to the signal output of the modulation circuit; and
    a voltage divider circuit coupled to the second input of the second transistor to cause the second transistor to conduct when the modulator output $V_o = V_h$ so as to limit the high output of the modulator circuit to $V_h$.

8. A control circuit according to Claim 7, further including a diode coupled in series with the voltage divider circuit to temperature compensate the second transistor so that ratiometric clamping of the second transistor is maintained with temperature variation.

9. A control circuit according to Claim 1, wherein the signal modifying circuit is a pulse amplitude modulation circuit.

10. A control circuit according to Claim 9, further including a pulse generating circuit for generating constant frequency pulses, $V_p$, of at least a predetermined amplitude.

11. A control circuit according to Claim 9 or 10, wherein said sensor comprises a variable position sensing device for generating said sensor output signal to said signal conditioning circuit for conversion to said linearly increasing signal, $V_m$, that is proportional to the position of said variable position device.

12. A control circuit according to Claim 11, wherein the pulse amplitude modulation circuit is coupled both to the pulse generating circuit and the signal conditioning circuit for pulse amplitude modulating the constant frequency pulses, $V_p$, with the linearly increasing signal, Vm, such that a pulse amplitude modulation output signal, $V_o$, is generated that represents the instantaneous position of said control device.

13. The control circuit as in Claim 11 or !2, wherein the control device comprises a throttle for controlling the fuel/air mixture of an internal combustion device, the throttle being moveable between said first and second positions; and wherein the control circuit comprises a Hall effect device coupled to the throttle and acting as said sensor for generating said output signal that is coupled to said signal conditioning circuit for converting throttle control position to the linearly increasing output signal, $V_m$.

14. A control circuit according to Claim 13, further including:

a) a second Hall effect sensor coupled to the throttle control device and a second signal conditioning circuit for generating a second linearly increasing output signal, $V^1_m$;
b) a comparator circuit coupled to the first and second signal conditioning circuits for receiving said first and second output signals, $V_m$ and $V^1_m$, and for generating an ouptut signal only when the output signals, $V_m$ and $V^1_m$, from the signal conditioning circuits differ at least a predetermined amount from each other; and
c) the pulse amplitude modulator circuit being coupled to the comparator such that when said comparator output signal is generated, the output $V_o < V_a$ at all times thus indicating an in-range error.

15. A control circuit according to Claim 14, further including:

a) a transistor in the pulse amplitude modulation circuit for causing the output, $V_o$;
b) the pulse generation circuit output, Vp, being coupled to the transistor; and
c) the comparator circuit output also being coupled to said transistor such that an output signal from the comparator circuit will cause the transistor to alter the modulation circuit output sig-

nal, $V_o$, to a continuous output signal that is less than $V_a$.

16. A control circuit according to Claim 15, wherein the low reference voltage adjustment circuit comprises:

a) a load resistor coupled to the transistor for determining the conduction of the transistor; and
b) an operational amplifier having a first input coupled to the transistor and a second input coupled to a variable resistor, and an output coupled to the load resistor such that by adjusting the variable resistor, the amount of conduction of the transistor can be controlled to set a minimum signal output level, $V_o = V_a$, from the modulation circuit.

17. A control circuit according to any of Claims 13 to 16, further including a microprocessor coupled to the output of the pulse amplitude modulation circuit for detecting false signals and receiving the output signal, $V_o$, representing the variable control device position to the signal conditioning circuit.

18. A control circuit according to any of Claims 9 to 17, further including an offset circuit forming a portion of the signal conditioning circuit so as to cause the signal conditioning circuit output to be in a designated range for use by the modulation circuit.

19. A control circuit according to Claim 1, wherein the control circuit is an analog control circuit.

20. A control circuit according to Claim 19, comprising:

a) first and second sensors for converting the position of said control device into an output signal;
b) first and second signal conditioning circuits each connected to a respective one of said first and second sensors and each generating said linearly increasing output signal to said control device; and
c) an output/diagnostic circuit coupled to the output of at least one of said signal conditioning circuits and generating a linearly increasing output signal, $V_o$, that represents the instantaneous position of said control device.

21. A control circuit according to Claim 20, comprising an in-range error detection circuit coupled to said first and second signal conditioning circuits for receiving said output signals and generating an output signal to the output circuit to change the output signal, $V_o$, if an in-range error occurs.

22. A control circuit according to Claim 21, wherein said in-range error detector circuit comprises:

a) first and second comparators, each comparator receiving the first and second signals of the first and second signal conditioning units; and

b) a bias circuit coupled to each of said comparators for establishing bias signals to each of said comparators, one of said bias signals being of greater magnitude than the other to detect if the difference between the first and second signal conditioning circuit output signals is greater than the greatest bias signal or less than the other bias signal thereby causing the output signal, $V_o$, of the output circuit to be changed.

23. A control circuit according to Claim 13, further comprising a microprocessor coupled to the output of the modulation circuit for regulating the fuel/air mixture of the internal combustion device based upon the pulse amplitude modulated signal, $V_o$.

24. A control circuit according to Claim 23 further including:

a) a second Hall effect sensor coupled to the throttle;

b) a first signal conditioning circuit coupled to said first Hall effect sensor and a second signal conditioning circuit coupled to said second Hall effect sensor, said first and second signal conditioning circuits generating corresponding first and second output signals; and

c) an in-range error detection circuit coupled to said first and second signal conditioning circuits for receiving said output signals and generating an output signal to the modulator to change the output signal of the modulator if an in-range error occurs.

25. A control circuit according to Claim 24, wherein said in-range error detection circuit comprises:

a) first and second comparators, each comparator receiving the first and second signals of the first and second signal conditioning units; and

b) a bias circuit coupled to each of said comparators for establishing first and second bias signals to each of said comparators, one of said bias signals being of greater magnitude than the other to detect if the difference between the first and second signal conditioning circuit output signals is greater than the greatest bias signal or less than the other bias signal thereby causing the output signal of the modulator to be changed.

26. A self-diagnostic modulator output circuit comprising:

a) a control device moveable between first and second positions;

b) first and second control circuits coupled to the control device for converting the control device position into linearly increasing output signals, $V_m$ and $V^1_m$, whose amplitudes are proportional to said control device position;

c) first and second signal conditioning circuits, each signal conditioning circuit being coupled to one of the respective control circuits and generating an output signal; and

d) a modulator circuit coupled to receive the output signals of said first and second signal conditioning circuits to generate a modulated output signal representing the control device position.

27. A self-diagnostic modulator output circuit according to Claim 26, wherein said control circuits comprise:

a) first and second Hall effect sensors for converting said control device position into said linearly increasing output signals, $V_m$ and $V^1_m$;

b) said first signal conditioning circuit coupled to said first Hall effect sensor and said second signal conditioning circuit coupled to said second Hall effect sensor, said first and second signal conditioning circuits generating corresponding first and second output signals; and

c) an in-range error detection circuit coupled to said first and second signal conditioning circuits for receiving said first and second output signals and generating a third output signal to the modulator to change the output signal of the modulator if an in-range error occurs.

28. A self-diagnostic modulator output circuit according to Claim 27, wherein said in-range error detection circuit comprises:

a) first and second comparators, each comparator receiving the first and second signals of the first and second signal conditioning circuits; and

b) a bias circuit coupled to each of said comparators for establishing bias signals to each of said comparators, one of said bias signals being of greater magnitude than the other to detect if the difference between the first and second signal conditioning circuit output signals is greater than the greatest bias signal or less than the other bias signal thereby causing the output signal of the frequency/diagnostic circuit to be changed.

**29.** A self-diagnostic modulator output circuit according to any of Claims 26 to 28, wherein the control device is a throttle to control the operation of an internal combustion device, and the modulator circuit is a pulsewidth modulation circuit coupled to the first and second Hall effect sensor circuits for pulsewidth modulating the linearly increasing output signals, $V_m$ and $V^1_m$, such that a pulsewidth modulated output signal, $V_o$, is generated that represents the position of the throttle; said output circuit also comprising a microprocessor coupled to the output of the modulation circuit for regulating the fuel/air mixture of the internal combustion device based upon the pulse amplitude modulated signal, $V_o$.

**30.** A self-diagnostic modulator output circuit according to Claim 26, 27 or 28, wherein said modulator circuit is a frequency modulator circuit.

FIG. 1

FIG. 2

FIG. 3

FIG. 4

FIG. 5

FIG. 6

FIG. 7

FIG. 8

FIG. 9

FIG. 10

FIG. 11

FIG. 13

FIG. 12

FIG. 15

FIG. 14